# FASCICULE DE BREVET EUROPEEN

(11) **EP 0 739 577 B1**
(45) Date de publication et mention de la délivrance du brevet: **10.03.1999**
(21) Numéro de dépôt: 95906375.1
(22) Date de dépôt: 06.01.1995
(51) Int. Cl.: H04Q 7/38

(54) **PROCEDE DE LOCALISATION D'UNE STATION MOBILE DE RADIOCOMMUNICATION CELLULAIRE, ET EQUIPEMENTS POUR LA MISE EN OEUVRE DU PROCEDE**
VERFAHREN ZUR LOKALISIERUNG EINER MOBILSTATION EINES ZELLULAREN FUNKSYSTEMS UND GERÄTE DAFÜR
METHOD FOR LOCATING A CELLULAR RADIOCOMMUNICATION MOBILE STATION, AND EQUIPMENT FOR IMPLEMENTING SAID METHOD

(30) Priorité: 12.01.1994 FR 9400271
(43) Date de publication de la demande: 30.10.1996
(73) Titulaire: NORTEL MATRA CELLULAR, 78042 Guyancourt (FR)
(72) Inventeur: SUGARBROAD, Ian, Plano Texas 75025 (US); CELLMER, Jean, F-78690 Les Essarts-le-Roi (FR); OHANA, Alain, Plano Texas 75025 (US); DUPLESSIS, Philippe, F-92700 Colombes (FR)
(74) Mandataire: Ryan, John Peter William
(86) Numéro de dépôt international: FR9500019
(87) Numéro de publication internationale: WO9519688

(56) Documents cités:
- EP-A- 0 568 824
- MOTOROLA TECHNICAL DEVELOPMENTS, vol. 13, Juillet 1991 SCHAUMBURG, ILLINOIS US, pages 67-69, XP 000259225 WEISS ET AL. 'CONVENTIONAL LOCAL AREA RADIO COVERAGE SYSTEM'

## Description

La présente invention concerne un procédé pour localiser une station mobile de communication radiotéléphonique cellulaire, ainsi que des équipements servant à cette localisation.

Les systèmes cellulaires connus permettent d'identifier la position d'un abonné au niveau d'une cellule, au moins lorsqu'il établit un appel. La demanderesse a toutefois estimé qu'il serait souhaitable de pouvoir connaître la position de l'abonné de façon plus précise, en particulier de pouvoir déterminer avec une précision suffisante si l'abonné se trouve à son domicile ou non. Un intérêt de cette localisation serait qu'elle permettrait d'offrir à l'abonné un service privilégié lorsqu'il se trouve à son domicile et utilise son radiotéléphone cellulaire. En particulier, il serait possible d'appliquer à l'abonné un tarif préférentiel lorsqu'il utilise son radiotéléphone cellulaire depuis son domicile, ce par quoi le service de radiotéléphonie cellulaire pourrait concurrencer les services de téléphonie fixes avec, pour les utilisateurs, l'avantage supplémentaire de ne pas avoir à disposer nécessairement d'un poste de téléphonie fixe en plus de leur poste de radiotéléphonie cellulaire.

Dans certains cas particuliers, des systèmes cellulaires permettent de localiser la position de l'abonné par triangulation. Néanmoins, cette solution présente quelques inconvénients :
- d'une part, une triangulation n'est possible que si la station mobile se trouve sous la couverture d'au moins trois cellules, ce qui n'est pas le cas général ;
- d'autre part, ces procédés de triangulation reposent sur le calcul du temps de transmission des signaux radioélectriques entre la station mobile et les stations de base, en supposant que la transmission s'effectue en vue directe. Ceci n'est pas toujours vrai, en particulier en milieu urbain, et il en résulte une incertitude relativement grande sur la position effective de l'abonné, incertitude incompatible avec l'objectif indiqué ci-dessus.

Le EP-A-0 568 824 décrit un système de radiotéléphonie cellulaire dans lequel des balises émettent des signaux de localisation des stations mobiles. Ces balises émettent chacune des signaux caractéristiques de la zone géographique où elles sont installées. Un inconvénient de ce système est que les balises constituent un réseau supplémentaire à gérer par l'opérateur du réseau cellulaire des stations de base. Pouvoir réaliser une localisation fine des utilisateurs pour offrir les services associés sur une grande étendue territoriale pose alors un sérieux problème à l'opérateur car il lui faut disposer de nombreux emplacements publics pour installer de telles balises.

Un but de l'invention est de proposer un procédé de localisation permettant d'obtenir de façon fiable la certitude que l'abonné se trouve à son domicile, ou au voisinage très proche de celui-ci.

L'invention propose ainsi un procédé pour localiser une station mobile de communication radiotéléphonique cellulaire, caractérisé en ce qu'on associe à un utilisateur de la station mobile au moins une balise fixe émettant, avec une portée sensiblement plus petite que la dimension caractéristique d'une cellule, un signal radio propre audit utilisateur, et en ce que, lorsque la station mobile capte le signal radio émis par la balise, elle adresse au réseau de communication un signal indiquant qu'elle se trouve à portée de la balise.

La portée d'émission de la balise sera typiquement celle d'un poste fixe d'un téléphone sans cordon, c'est-à-dire inférieure à 300 mètres environ, permettant de couvrir une zone correspondant au domicile ou au lieu de travail de l'utilisateur. L'utilisateur peut par ailleurs disposer de plusieurs balises, s'il souhaite disposer d'une couverture plus étendue, ou s'il souhaite avoir plusieurs zones de rattachement (domicile principal et résidence secondaire par exemple).

La balise fixe émet de préférence son signal radio sur la même bande de fréquences que les communications descendantes des stations de base du réseau cellulaire vers les stations mobiles. Il est particulièrement intéressant de prévoir que ce signal radio soit émis par la balise selon le format d'un canal de diffusion d'une station de base du réseau vers des stations mobiles. Dans ce cas, la station mobile écoute le canal sur lequel émet sa balise associée de la même manière qu'elle écoute une station de base du réseau, ce qui simplifie l'équipement nécessaire à la détection du signal radio de la balise.

Le second aspect de l'invention vise un équipement radiotéléphonique pour un utilisateur d'un réseau de radiocommunication cellulaire, comprenant une station mobile apte à communiquer avec des stations de base du réseau, caractérisé en ce qu'il comprend en outre au moins une balise fixe émettant, avec une portée sensiblement plus petite que la dimension caractéristique d'une cellule du réseau, un signal radio propre à l'utilisateur, la station mobile étant agencée pour être sensible au signal radio émis par la balise et, en réponse à la détection de ce signal radio, adresser à la station de base avec laquelle elle communique un signal indiquant qu'elle se trouve à portée de la balise.

Enfin, selon un troisième aspect, l'invention propose une balise radioélectrique pour localiser une station mobile de communication radiotéléphonique cellulaire, caractérisée en ce qu'elle comprend des moyens pour émettre, avec une portée sensiblement plus petite que la dimension caractéristique d'une cellule de réseau radiotéléphonique, un signal radio propre à l'utilisateur selon le format d'un canal de diffusion d'une station de base du réseau cellulaire vers des stations mobiles.

D'autres particularités et avantages de la présente invention apparaîtront dans la description ci-après d'un exemple de réalisation préféré mais non limitatif, en référence aux dessins annexés, dans lesquels :
- la figure 1 est un schéma illustrant les communications entre une station de base, une station mobile et une balise selon l'invention ; et
- la figure 2 est un schéma synoptique d'une balise de localisation selon l'invention.

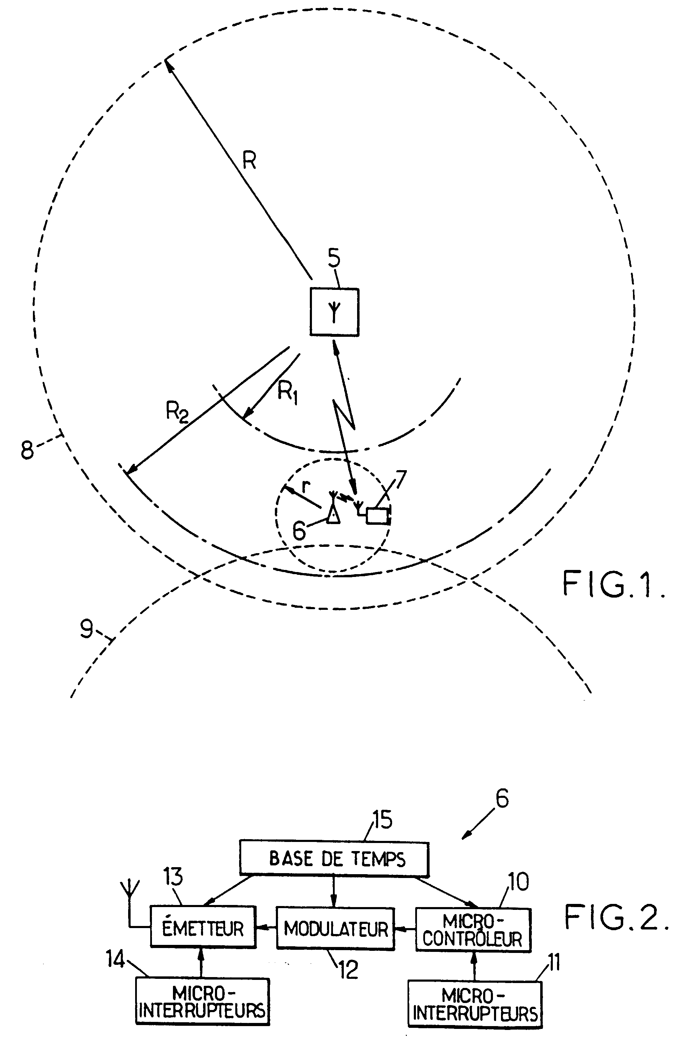

Dans un système de radiotéléphonie cellulaire, des stations de base 5 sont réparties sur le territoire à couvrir, qui est ainsi divisé en cellules. Bien entendu, la représentation des cellules 8, 9 sur la figure 1 est purement symbolique, dans la mesure où les cellules réelles ne sont pas circulaires en général, et où les frontières de cellules ne sont pas bien définies géométriquement compte tenu des caractéristiques de propagation radio. La dimension caractéristique R d'une cellule est la distance maximale entre sa station de base et une station mobile pouvant communiquer avec celle-ci. Cette dimension caractéristique R est typiquement comprise entre 1 km environ pour des microcellules en milieu urbain et 35 km environ pour des cellules en milieu rural. Dans tous les cas, ces dimensions caractéristiques sont trop grandes pour que la localisation d'une station mobile dans une cellule permette de déterminer si la station mobile se trouve au domicile de son utilisateur.

La figure 1 montre une balise fixe 6 installée au domicile de l'utilisateur d'une station mobile 7. La balise 6 émet un signal radio à courte portée caractéristique de l'utilisateur. La portée d'émission r de la balise 6 est inférieure à 300 mètres de façon à être sensiblement plus petite que la dimension caractéristique R de n'importe quelle cellule du réseau. Le fait que la station mobile 7 capte ou non ce signal radio caractéristique de l'utilisateur permet de déterminer si la station mobile se trouve à portée de la balise 6, ce qui est assimilé au fait que l'utilisateur se sert de sa station mobile depuis son domicile. La puissance d'émission de la balise est inférieure à 200 mW environ, typiquement de 50 mW.

Dans tous les systèmes de radiotéléphonie cellulaire modernes, en particulier les systèmes utilisant une méthode d'accès multiple à répartition dans le temps (AMRT), les stations mobiles analysent un canal de diffusion sur lequel émet la station de base de la cellule dans laquelle elles sont localisées, et elles sont également en mesure d'analyser les canaux de diffusion qu'elles reçoivent des stations de base d'autres cellules, afin de permettre le transfert de communication lorsque la station mobile change de cellule. C'est notamment le cas des systèmes cellulaires GSM, DCS, et systèmes dérivés plus particulièrement concernés par la description ci-après. Pour une description générale du système GSM, on pourra se reporter à l'article "Le système cellulaire numérique européen de communication avec les mobiles" de B. Ghillebaert et al, paru dans l'Echo des Recherches N° 131, ler trimestre 1988, pages 5-16.

Dans le système GSM ou DCS, le canal de diffusion BCCH est constitué par une tranche temporelle particulière de chaque trame AMRT émise par la station de base. La fréquence d'émission sur le canal de diffusion BCCH est fixe pour chaque station de base, mais varie d'une station de base à une autre. Ceci permet à la station mobile, dans les tranches temporelles autres que celles qui lui sont réservées, de surveiller les autres canaux de diffusion pour déterminer la station de base procurant la meilleure qualité de réception. Le signal radio émis par la balise 6 peut donc être émis selon le format d'un canal de diffusion BCCH sans augmenter excessivement la complexité de la station mobile 7.

La balise 6 peut être réalisée suivant le schéma synoptique représenté sur la figure 2. Le micro-contrôleur 10 produit la séquence binaire caractéristique d'un canal de diffusion BCCH du système, en y incluant un signal identifiant cette séquence comme provenant d'une balise fixe, et en y incluant en outre une donnée d'identification de la balise lue sur une interface modifiable à l'installation, constituée par exemple par une série de micro-interrupteurs 11. Le modulateur 12 met en forme les séquences binaires issues du micro-contrôleur selon le mode de transmission du système (modulation GMSK dans le cas du GSM ou du DCS). L'émetteur 13 assure la transposition du signal issu du modulateur 12 à l'une des fréquences de canal du système. Cette fréquence est définie lors de l'installation de la balise par une interface appropriée telle qu'une série de micro-interrupteurs 14 de manière à être différente de chacune des fréquences de diffusion BCCH utilisées par les stations de base avec lesquelles la station mobile 7 est susceptible de communiquer lorsqu'elle se trouve à portée de la balise 6. Le micro-contrôleur 10, le modulateur 12 et l'émetteur 13 sont cadencés au rythme des trames AMRT du système par une base de temps 15 avec la stabilité requise.

Une fois installée au domicile de l'utilisateur (ou à son lieu de travail, ou encore en tout lieu qu'il indique), la balise 6 est scellée de façon qu'elle soit inamovible et que l'accès aux micro-interrupteurs 11, 14 soit impossible.

Comme la balise 6 émet sur la même bande de fréquences que les stations de base 5, son utilisation ne nécessite pas de modifier l'étage radio de la station mobile 7. Et comme le format d'émission est le même que celui des canaux BCCH, la démodulation en bande de base par la station mobile est également inchangée. La station mobile a seulement besoin d'être programmée pour permettre les échanges de signaux indiqués ci-après.

La donnée d'identification de la balise est également stockée dans la station mobile 7. Dans le cas du GSM ou du DCS, une station mobile se compose d'un équipement mobile banalisé associé à un module d'identité d'abonné (SIM). Le plus commode est alors de stocker la donnée d'identification de la balise dans une zone de mémoire inscriptible du module SIM. Lorsqu'une station mobile 7 capte un signal radio identifié comme provenant d'une balise fixe 6, elle compare la donnée d'identification reçue de la balise à celle stockée dans son module SIM. La présence de sa balise associée est détectée en cas de concordance. La station mobile indique alors à l'utilisateur qu'il se trouve à portée de la balise, par exemple par l'affichage d'un message correspondant, pour permettre à l'utilisateur de savoir quel tarif lui sera appliqué s'il établit une communication. D'autre part, si l'utilisateur établit ou reçoit une communication radiotéléphonique, la station mobile 7 transmet au réseau un signal indiquant que la station mobile se trouve à portée de sa balise associée.

Dans le cas d'un appel montant issu de la station mobile 7, la requête d'accès aléatoire émise par la station mobile sur le canal RACH de la cellule dans laquelle elle est enregistrée inclut une indication selon laquelle elle se trouve à portée de la balise 6. Un canal de signalisation dédié (SDCCH) est alors attribué à la station mobile, et la communication s'établit de façon classique, mais un tarif préférentiel est appliqué à l'utilisateur.

Dans le cas d'un appel descendant destiné à l'utilisateur, les stations de base recherchent d'abord la station mobile de l'utilisateur (paging), et la requête d'accès aléatoire émise par la station mobile 7 en réponse à cette recherche inclut une indication selon laquelle la station mobile se trouve à portée de la balise. Un canal dédié (SDCCH) est alors attribué à la station mobile, et la communication s'établit de façon classique, en appliquant le cas échéant un tarif préférentiel au correspondant qui a demandé la communication.

On notera l'intérêt que présente l'indication par la station mobile d'un appel, demandé ou reçu, de type résidentiel (à portée de la balise) dès le premier contact de la station mobile avec le réseau. Ceci permet par exemple, si l'opérateur le souhaite, d'affecter en priorité une ressource particulière à ce type de communication. Cette indication est possible dans le canal d'accès aléatoire RACH dans un système de type GSM ou DCS, en utilisant des codes de réserve disponibles pour ce type d'application.

Pour minimiser les risques de fraude, on peut prévoir que le réseau effectue une vérification de la localisation découlant de l'indication fournie par la station mobile 7.

Le réseau comporte un enregistreur de localisation nominal (HLR), base de données où sont stockées les informations propres aux utilisateurs. On peut inclure dans ces informations :
- une indication du droit de l'utilisateur au tarif préférentiel,
- la donnée d'identification de la balise de l'utilisateur,
- le numéro de la station de base de la cellule où est installée la balise, ainsi que le cas échéant les numéros des autres stations de base avec lesquelles la station mobile de l'utilisateur peut communiquer lorsqu'elle se trouve à portée de la balise associée (dans l'exemple schématisé sur la figure 1, le HLR stockera le numéro de la station de base 5 de la cellule 8 où est installée la balise 6, ainsi que le numéro de la station de base de la cellule 9 avec laquelle la station mobile 7 peut communiquer tout en étant à portée de la balise 6),
- et, éventuellement, pour chaque station de base répertoriée dans la rubrique précédente, une plage de distances [R₁,R₂] dans laquelle la distance entre la station de base et la station mobile est susceptible de tomber lorsque la station mobile est à portée de sa balise associée (figure 1). La plage de valeurs [R₁,R₂] sera en général centrée sur la distance entre la station de base 5 et la balise fixe 6 (typiquement connue avec une incertitude inférieure à 1 km lors de l'installation de la balise), et aura une largeur tenant compte de la portée d'émission r de la balise 6 et de la possibilité de trajets de propagation indirects entre la station de base et la station mobile (typiquement R₂ - R₁ ≈ 2 km).

Les données ci-dessus sont copiées dans l'enregistreur de localisation des visiteurs (VLR) dont dépend la cellule où est enregistrée la station mobile 7. Lorsque un contrôleur de station de base (BSC) reçoit d'une station mobile une requête d'accès aléatoire incluant une indication de localisation à portée de la balise associée, il interroge le VLR (via le commutateur du service mobile MSC) qui retourne les données ci-dessus. Le BSC procède alors aux vérifications suivantes :
- il vérifie que l'utilisateur a bien droit au tarif préférentiel,
- il vérifie que la station de base qui a retransmis la requête d'accès aléatoire est bien l'une de celles dont le numéro est enregistré,
- et, le cas échéant, il vérifie que la distance estimée entre cette station de base et la station mobile est compatible avec la plage [R₁,R₂]. Cette distance est estimée par la station de base, comme il est prévu dans le cadre du GSM ou du DCS, sur la base du retard de synchronisation du canal d'accès aléatoire RACH.

Pour réduire encore les risques de fraude et faciliter la gestion du système, on peut encore interdire les transferts de communication entre stations de base (handover) lorsqu'il s'agit d'une communication de type résidentiel. Ceci peut être réalisé au niveau du réseau, ou encore en empêchant la station mobile de transmettre pendant la communication de type résidentiel les valeurs de champ radioélectrique reçues des cellules voisines (étape obligatoire de la procédure de transfert de communication).

Il est avantageux de télécharger la donnée d'identification de la balise dans le module SIM de la station mobile depuis le réseau lors d'une mise à jour de localisation. Ce téléchargement peut être réalisé de la même manière que celui de l'identité temporaire d'abonné mobile (TMSI) dans le cas du GSM ou du DCS où les mises à jour de localisation sont effectuées périodiquement ou lorsque la station mobile change de cellule. Cette disposition évite d'avoir à intervenir directement sur le module SIM lors de l'attribution d'une nouvelle balise fixe à un utilisateur.

Pour ne pas multiplier les appareils dont doit disposer l'utilisateur, la balise 6 peut avantageusement être incorporée dans le même boîtier que le dispositif de chargement électrique de la batterie de la station mobile 7, ce boîtier devant toutefois être scellé de façon inamovible.

Bien qu'on ait décrit l'invention dans son application à une procédure particulière de tarification des communications, on comprendra que le procédé de localisation des stations mobiles peut comporter de nombreuses autres applications dès lors que l'information de localisation présente un intérêt. Il peut notamment servir à autoriser l'accès à des services particuliers, ou encore à intervenir dans les priorités d'allocation de ressources radio.

## Revendications

1. Procédé pour localiser une station mobile de communication radiotéléphonique cellulaire, caractérisé en ce qu'on associe à un utilisateur de la station mobile (7) au moins une balise fixe (6) émettant, avec une portée (r) sensiblement plus petite que la dimension caractéristique (R) d'une cellule, un signal radio propre audit utilisateur, et en ce que, lorsque la station mobile capte le signal radio émis par la balise, elle adresse au réseau de communication un signal indiquant qu'elle se trouve à portée de la balise.

2. Procédé selon la revendication 1, caractérisé en ce que l'émission du signal radio par la balise fixe est effectuée sur la même bande de fréquences que les communications descendantes des stations de base du réseau cellulaire vers les stations mobiles.

3. Procédé selon la revendication 2, caractérisé en ce que ledit signal radio est émis par la balise selon le format d'un canal de diffusion (BCCH) d'une station de base du réseau cellulaire vers des stations mobiles.

4. Procédé selon l'une quelconque des revendications 1 à 3, caractérisé en ce que le signal adressé au réseau par la station mobile pour indiquer qu'elle se trouve à portée de sa balise associée est émis sur un canal d'accès aléatoire (RACH) lors de l'établissement d'une communication faisant intervenir ladite station mobile.

5. Procédé selon l'une quelconque des revendications 1 à 4, caractérisé en ce que le signal radio émis par la balise inclut une donnée d'identification de la balise attribuée à l'utilisateur et stockée dans la station mobile, de préférence dans un module d'identité d'abonné, et en ce que la station mobile n'émet le signal indiquant qu'elle se trouve à portée de la balise qu'après avoir vérifié que la donnée d'identification de balise incluse dans le signal radio qu'elle reçoit de la balise correspond à celle qu'elle mémorise.

6. Procédé selon la revendication 5, caractérisé en ce que la donnée d'identification de la balise est en outre stockée dans une base de données (HLR) du réseau, et est téléchargée depuis le réseau dans la station mobile lors d'une mise à jour de localisation.

7. Procédé selon la revendication 5 ou 6, caractérisé en ce que le réseau inclut une base de données (HLR) où la donnée d'identification de la balise est stockée avec, en correspondance, au moins un numéro d'une station de base (5) susceptible de communiquer avec la station mobile (7) lorsque celle-ci se trouve à portée de la balise fixe (6), et en ce que le réseau vérifie que le signal émis par la station mobile pour indiquer qu'elle se trouve à portée de la balise a été reçu par une station de base dont le numéro est stocké en correspondance avec la donnée d'identification de la balise.

8. Procédé selon la revendication 7, caractérisé en ce que, en plus de chaque numéro de station de base susceptible de communiquer avec la station mobile lorsque celle-ci se trouve à portée de la balise fixe, la donnée d'identification de la balise est stockée avec une plage de distances pouvant séparer ladite station de base de la station mobile lorsque celle-ci se trouve à portée de la balise, en ce que chaque station de base communiquant avec la station mobile détermine la distance qui la sépare de cette station mobile, et en ce que le réseau vérifie la comptabilité entre la distance déterminée et la plage de distances stockée.

9. Procédé selon la revendication 7 ou 8, caractérisé en ce que la vérification de localisation par le réseau est effectuée au niveau d'un contrôleur de station de base (BSC) du réseau.

10. Procédé selon l'une quelconque des revendications 1 à 9, caractérisé en ce que la portée d'émission (r) de la balise (6) est inférieure à 300 mètres environ.

11. Procédé selon l'une quelconque des revendications 1 à 10, caractérisé en ce que la puissance d'émission de la balise est inférieure à 200 mW environ.

12. Equipement radiotéléphonique pour un utilisateur d'un réseau de radiocommunication cellulaire, comprenant une station mobile (7) apte à communiquer avec des stations de base (5) du réseau, caractérisé en ce qu'il comprend en outre au moins une balise fixe (6) émettant, avec une portée (r) sensiblement plus petite que la dimension caractéristique (R) d'une cellule du réseau, un signal radio propre à l'utilisateur, la station mobile étant agencée pour être sensible au signal radio émis par la balise et, en réponse à la détection de ce signal radio, adresser à la station de base avec laquelle elle communique un signal indiquant qu'elle se trouve à portée de la balise.

13. Equipement selon la revendication 12, caractérisé en ce que la balise fixe (6) est réalisée dans un boîtier commun avec un dispositif de chargement électrique de la batterie de la station mobile.

14. Balise radioélectrique (6) pour localiser une station mobile de communication radiotéléphonique cellulaire (7) en mettant en oeuvre un procédé selon l'une quelconque des revendications 1 à 11, caractérisée en ce qu'elle comprend des moyens pour émettre, avec une portée (r) sensiblement plus petite que la dimension caractéristique (R) d'une cellule de réseau radiotéléphonique, un signal radio propre à l'utilisateur selon le format d'un canal de diffusion (BCCH) d'une station de base (5) du réseau cellulaire vers des stations mobiles.

## Claims

1. Method for locating a cellular radio telephone communication mobile station, characterized in that at least one fixed beacon (6) is associated with a user of the mobile station (7) and emits, with a range (r) substantially smaller than the characteristic dimension (R) of a cell, a radio signal specific to the said user, and in that, when the mobile station picks up the radio signal emitted by the beacon, it addresses a signal to the communication network indicating that it is within range of the beacon.

2. Method according to claim 1, characterized in that the emitting of the radio signal by the fixed beacon is performed on the same frequency band as the down communications from the base stations of the cellular network to the mobile stations.

3. Method according to claim 2, characterized in that said radio signal is emitted by the beacon according to the format of a channel (BCCH) for broadcasting from a base station of the cellular network to mobile stations.

4. Method according to any one of claims 1 to 3, characterized in that the signal addressed to the network by the mobile station to indicate that it is within range of its associated beacon is emitted on a random access channel (RACH) when setting up a communication involving said mobile station.

5. Method according to any one of claims 1 to 4, characterized in that the radio signal emitted by the beacon includes a datum for identifying the beacon allocated to the user and stored in the mobile station, preferably in a subscriber identity module, and in that the mobile station emits the signal indicating that it is within range of the beacon only after having checked that the beacon identification datum included in the radio signal which it receives from the beacon corresponds to that which it has in memory.

6. Method according to claim 5, characterized in that the datum for identifying the beacon is furthermore stored in a database (HLR) of the network, and is downloaded from the network to the mobile station during a location update.

7. Method according to claim 5 or 6, characterized in that the network includes a database (HLR) in which the datum for identifying the beacon is stored together with, correspondingly, at least one number of a base station (5) liable to communicate with the mobile station (7) when the latter is within range of the fixed beacon (6), and in that the network checks that the signal emitted by the mobile station to indicate that it is within range of the beacon has been received by a base station whose number is stored correspondingly with the datum for identifying the beacon.

8. Method according to claim 7, characterized in that, in addition to each number of base station liable to communicate with the mobile station when the latter is within range of the fixed beacon, the datum for identifying the beacon is stored together with a distance bracket which may separate said base station from the mobile station when the latter is within range of the beacon, in that each base station communicating with the mobile station determines the distance which separates it from this mobile station, and in that the network checks the accounting [sic] between the determined distance and the stored distance bracket.

9. Method according to claim 7 or 8, characterized in that the checking of location by the network is performed at the level of a base station controller (BSC) of the network.

10. Method according to any one of claims 1 to 9, characterized in that the emission range (r) of the beacon (6) is less than around 300 meters.

11. Method according to any one of claims 1 to 10, characterized in that the emitting power of the beacon is less than around 200 mW.

12. Radio telephone equipment for a user of a cellular radio communication network, comprising a mobile station (7) able to communicate with base stations (5) of the network, characterized in that it furthermore comprises at least one fixed beacon (6) emitting, with a range (r) susbtantially smaller than the characteristic dimension (R) of a cell of the network, a radio signal specific to the user, the mobile station being contrived to be responsive to the radio signal emitted by the beacon and, in response to the detecting of this radio signal, to address a signal to the base station with which it is communicating, indicating that it is within range of the beacon.

13. Equipment according to claim 12, characterized in that the fixed beacon (6) is constructed inside a common housing together with a device for the electrical charging of the battery of the mobile station.

14. Radio beacon (6) for locating a cellular radio telephone communication mobile station (7), characterized in that it comprises means for emitting, with a range (r) substantially smaller than the characteristic dimension (R) of a radio telephone network cell, a radio signal specific to the user according to the format of a channel (BCCH) for broadcasting from a base station (5) of the cellular network to mobile stations.

## Patentansprüche

1. Verfahren zur Lokalisierung einer Zellularfunk-Telefonkommunikations-Mobilstation,
dadurch gekennzeichnet, daß zumindest eine feste Bake (6) dem Benutzer der Mobilstation (7) zugeordnet ist und mit einer Reichweite (r), die beträchtlich kleiner als die charakteristische Abmessung (R) einer Zelle ist, ein für diesen Benutzer spezifisches Funksignal aussendet, und daß die Mobilstation bei Aufnahme des von der Bake ausgesandten Funksignals ein Signal an das Kommunikationsnetz liefert, das anzeigt, daß sich die Mobilstation in der Reichweite der Bake befindet.

2. Verfahren nach Anspruch 1,
dadurch gekennzeichnet, daß die Aussendung des Funksignals durch die feste Bake in dem gleichen Frequenzband erfolgt, wie die Abwärtskommunikationen von den Basisstationen des Zellularnetzes zu den Mobilstationen.

3. Verfahren nach Anspruch 2,
dadurch gekennzeichnet, daß das Funksignal von der Bake entsprechend dem Format eines Kanals (BCCH) zur Rundsendung von einer Basisstation des Zellularnetzes zu Mobil stationen ausgesandt wird.

4. Verfahren nach Anspruch 1 bis 3,
dadurch gekennzeichnet, daß das von der Mobilstation an das Netz gelieferte Signal zur Anzeige dafür, daß sich die Mobilstation in der Reichweite der zugehörigen Bake befindet, auf einen Direktzugriffskanal (RACH) ausgesandt wird, wenn eine Kommunikation aufgebaut wird, an der die Mobilstation beteiligt ist.

5. Verfahren nach einem der Ansprüche 1 bis 4,
dadurch gekennzeichnet, daß das von der Bake ausgesandte Funksignal Daten zur Identifikation der dem Benutzer zugeteilten Bake einschließt, die in der Mobilstation, vorzugsweise in dem Teilnehmeridentitätsmodul, gespeichert sind, und daß die Mobilstation das Signal, das anzeigt, daß sie sich innerhalb der Reichweite der Bake befindet, lediglich nach einer Überprüfung aussendet, ob die Bakenidentifikationsdaten, die in dem Funksignal enthalten sind, das die Mobilstation von der Bake empfängt, den Daten entspricht, die sie gespeichert hat.

6. Verfahren nach Anspruch 5,
dadurch gekennzeichnet, daß die Identifikationsdaten der Bake weiterhin in einer Datenbank (HLR) des Netzwerkes gespeichert sind und während einer Standortaktualisierung von dem Netz auf die Mobilstation heruntergeladen werden.

7. Verfahren nach Anspruch 5 oder 6,
dadurch gekennzeichnet, daß das Netz eine Datenbank (HLR) einschließt, in der die Identifikationsdaten der Bake zusammen mit entsprechend zumindest einer Nummer einer Basisstation (5) gespeichert ist, die zur Kommunikation mit der Mobilstation (7) vorgesehen ist, wenn die letztere sich in der Reichweite der festen Bake (6) befindet, und daß das Netz prüft, ob das von der Mobilstation zur Anzeige dafür ausgesandte Signal, daß sie sich in der Reichweite der Bake befindet, von einer Basisstation empfangen wurde, deren Nummer in Entsprechung zu den Identifikationsdaten der Bake gespeichert ist.

8. Verfahren nach Anspruch 7,
dadurch gekennzeichnet, daß zusätzlich zu jeder Nummer der Basisstation, die zur Kommunikation mit der Mobilstation vorgesehen ist, wenn sich die letztere innerhalb der Reichweite der festen Bake befindet, die Identifikationsdaten der Bake zusammen mit einem Abstandsbereich gespeichert werden, der die Basisstation von der Mobilstation trennt, wenn sich die letztere innerhalb der Reichweite der Bake befindet, daß jede mit der Mobilstation in Kommunikation stehende Basisstation die Entfernung bestimmt, die sie von dieser Mobilstation trennt, und daß das Netzwerk die Übereinstimmung zwischen der festgestellten Entfernung und dem gespeicherten Entfernungsbereich prüft.

9. Verfahren nach Anspruch 7 oder 8,
dadurch gekennzeichnet, daß die Prüfung des Standortes durch das Netzwerk auf der Ebene einer Basisstations-Steuereinrichtung (BSC) des Netzwerkes durchgeführt wird.

10. Verfahren nach einem der Ansprüche 1 bis 9,
dadurch gekennzeichnet, daß die Sendereichweite (r) der Bake (6) kleiner als ungefähr 300 Meter ist.

11. Verfahren nach einem der Ansprüche 1 bis 10,
dadurch gekennzeichnet, daß die Sendeleistung der Bake kleiner als ungefähr 200 mW ist.

12. Funktelefon-Ausrüstung für einen Benutzer eines Zellularfunk-Kommunikationsnetzes mit einer Mobilstation (7), die mit Basisstationen (5) des Netzes in Kommunikation treten kann,
dadurch gekennzeichnet, daß sie weiterhin zumindest eine feste Bake (6) aufweist, die mit einer Reichweite (r), die wesentlich kleiner als die charakteristische Abmessung (R) einer Zelle des Netzes ist, ein für den Benutzer spezifisches Funksignal aussendet, wobei die Mobilstation derart ausgebildet ist, daß sie auf das von der Bake ausgesandte Funksignal anspricht und als Antwort auf die Erfassung dieses Funksignals ein Signal an die Basisstation liefert, mit der sie in Kommunikation steht, wobei dieses Signal anzeigt, daß sich die Mobilstation innerhalb der Reichweite der Bake befindet.

13. Ausrüstung nach Anspruch 12,
dadurch gekennzeichnet, daß die feste Bake (6) im Inneren eines gemeinsamen Gehäuses zusammen mit einem Gerät für die elektrische Ladung der Batterie der Mobilstation ausgebildet ist.

14. Funkbake (6) zur Bestimmung des Standortes einer Zellularfunk-Telefonkommunikations-Mobilstation (7),
dadurch gekennzeichnet, daß sie Einrichtungen zur Aussendung über eine Reichweite (r), die beträchtlich kleiner als die charkteristische Abmessung (r) einer Funktelefon-Neztwerkzelle ist, eines für den Benutzer spezifischen Funksignals entsprechend dem Format eines Kanals (BCCH) für die Rundsendung von einer Basisstation (5) des Zellularnetzes zu den Mobilstationen aufweist.
